Europäisches Patentamt

European Patent Office

Office européen des brevets

(19)

(11) Veröffentlichungsnummer: **0 191 917**
**B1**

(12) **EUROPÄISCHE PATENTSCHRIFT**

(45) Veröffentlichungstag der Patentschrift: **25.07.90**

(51) Int. Cl.⁵: **A 63 C 11/22**

(21) Anmeldenummer: **85115228.0**

(22) Anmeldetag: **30.11.85**

(54) Zusatzgerät, insbesondere Eispickel oder Schaufel.

(30) Priorität: **20.02.85 DE 8504760 u**

(43) Veröffentlichungstag der Anmeldung:
**27.08.86 Patentblatt 86/35**

(45) Bekanntmachung des Hinweises auf die
Patenterteilung:
**25.07.90 Patentblatt 90/30**

(84) Benannte Vertragsstaaten:
**AT CH DE FR LI SE**

(56) Entgegenhaltungen:
**AT-B- 206 837**
**CH-A- 299 220**
**DE-A-2 834 259**
**FR-A-1 469 196**
**FR-A-2 558 694**
**US-A-1 945 430**
**US-A-3 378 272**
**US-A-4 129 327**
**US-A-4 134 703**

(73) Patentinhaber: **Lenhart, Karl**
**Zollstrasse 58**
**CH-8262 Ramsen (CH)**

(72) Erfinder: **Lenhart, Karl**
**Zollstrasse 58**
**CH-8262 Ramsen (CH)**

(74) Vertreter: **Raible, Hans, Dipl.-Ing.**
**Schoderstrasse 10**
**D-7000 Stuttgart 1 (DE)**

Courier Press, Leamington Spa, England.

**Beschreibung**

Die Erfindung betrifft ein Arbeits-Zusatzgerät, insbesondere einen Eispickel oder eine Schaufel, mit Mitteln zur Befestigung an einem Stock nach Art eines Geh- oder Skistocks, oder an einem Element eines solchen Stocks.

Man kennt ein derartiges Zusatzgerät in Form einer Schaufel, die an einem Skistock angeklemmt werden kann. Die Befestigung verträgt aber nicht die Belastungen, die beim Arbeiten mit einer solchen Schaufel notwendig auftreten, und deshalb hat sie sich in der Praxis nicht bewährt.

Die US-A-4 129 327 zeigt eine Schaufel mit zwei Handgriffen. Der eine Handgriff ist über einen Stiel in normaler Weise am Schaufelblatt befestigt. Der zweite Handgriff ist über einen separaten Stiel und ein U-förmiges Verbindungsstück nur mit der Vorderkante des Schaufelblatts verbunden, so daß beim Anheben einer Last mit Hilfe des zweiten Handgriffs die auf diesen ausgeübte Kraft direkt auf das vordere, am weitesten in der Erde befindliche Ende der Schaufel wirkt. Die Benutzung dieser Schaufel zum Graben soll weniger ermüdend sein als die einer konventionellen Schaufel mit nur einem Handgriff und nur einem Stiel.

Ferner kennt man aus der FR-A-1 469 196 ein Vielzweckwerkzeug, das sowohl zum Graben, Hacken, Schneiden oder als Beil oder als Spitzhacke verwendet werden kann. Es besteht aus einem Grundwerkzeug mit der Grundform eines Beils. Dieses hat zwei Handgriffe, die um eine gemeinsame Achse verschwenkbar sind, so daß das Grundwerkzeug auch als Drahtschere oder dergleichen verwendbar ist. Ferner ist ein Schaufelelement vorgesehen, das mit dem Grundwerkzeug in drei verschiedenen Winkelstellungen gekuppelt werden kann, nämlich in einer Transportstellung, einer Stellung, in der das Schaufelblatt zum Hacken verwendet werden kann, und einer dritten Stellung, in der das Schaufelblatt zum Graben verwendet werden kann. Das Kuppeln mit dem Grundwerkzeug erfolgt jeweils durch Verschwenken der Handgriffe des letzteren, wodurch die Teile der Axt mit einem Beschlag auf der Schaufel in der gewünschten Drehstellung verhakt werden.

Aus der NO-A-31 602 kennt man einen Skistockbeschlag, der zur Befestigung an einem hölzernen Skistock gedacht ist. Dieser Beschlag hat ein Gewinde, auf das ein Skiteller aufgeschraubt wird. Nach Abschrauben dieses Tellers kann auf den Beschlag eine Schaufel aufgeschraubt werden. Gegen Drehung wird diese dann durch einen Bolzen und eine Flügelmutter gesichert, welche den Beschlag und die Schaufel durchdringen. Ein solches Zusatzgerät ist jedoch kompliziert und für moderne Skistöcke, die gewöhnlich aus einem Metallrohr hergestellt sind, wenig geeignet.

Der Erfindung liegt deshalb die Aufgabe zugrunde, die bekannten Zusatzgeräte zu verbessern.

Nach der Erfindung wird diese Aufgabe bei einem eingangs genannten Arbeits-Zusatzgerät dadurch gelöst, daß das Zusatzgerät eine Aufnahmevorrichtung aufweist, welche mit Ausnehmungen zur passenden Aufnahme und parallelen Befestigung von zwei jeweils aus einem Metallrohr ausgebildeten Stöcken oder Stockelementen versehen ist. Dadurch, daß an der Aufnahmevorrichtung zwei aus einem Metallrohr ausgebildete Stöcke oder Stockabschnitte im wesentlichen parallel befestigt sind, wirkt ein bei der Arbeit auftretendes Drehmoment immer gleichzeitig auf beide Stöcke eines solchen Stockpaares und kann daher von diesen sehr gut aufgenommen werden. Außerdem verteilt sich die mechanische Belastung auf beide Stöcke, so daß die Wahrscheinlichkeit einer Beschädigung wesentlich verringert wird. Praktische Versuche haben gezeigt, daß man mit einem solchen Zusatzgerät auch harte Arbeiten ausführen kann, wobei ein großer Vorteil das sehr niedrige Gewicht der erforderlichen Aufnahmevorrichtung ist. Diese kann im Extremfall aus zwei Rohren bestehen, die längs einer Mantellinie miteinander verschweißt oder sonstwie verbunden sind.

Mit besonderem Vorteil geht man dabei so vor, daß die Aufnahmevorrichtung zur Befestigung der beiden aus einem Metallrohr ausgebildeten Stöcke oder Stockelemente in einem solchen Abstand voneinander ausgebildet ist, daß diese mit einer Hand umfaßbar sind. Metallrohre haben nämlich gewöhnlich einen solch kleinen Durchmesser, daß man sie selbst kurzzeitig nur schwierig mit der Hand halten kann. Dies gilt besonders im Winter, wo man beim Arbeiten gewöhnlich Handschuhe benutzt. Dadurch, daß man die Stöcke oder Stockelemente an der Aufnahmevorrichtung in einem solchen Abstand befestigt, daß sie mit einer Hand umfaßbar sind, hat man einen ungleich besseren Griff und kann z.B. auch in hartem Schnee arbeiten, wie das häufig nach Lawinenunglücken bei der Suche nach Verschütteten erforderlich wird. Man kann ein solches paralleles Metallstockpaar, das im Querschnitt etwa die Form einer "8" hat, auch mit Handschuhen sehr gut greifen und festhalten, und die Erfahrungen der Praxis zeigen voll den Nutzen dieses Konzepts. Insbesondere kann ein Skifahrer seine Metallstöcke oder deren Elemente bei Bedarf sogleich in Bestandteile eines Werkzeugs umfunktionieren, so daß er z.B. nur in seinem Rucksack die Schaufel und die daran befestigte Aufnahmevorrichtung zu transportieren braucht, nicht aber einen Griff für die Schaufel, da er hierfür seine Skistöcke verwenden kann.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen.

Es zeigt:

Fig. 1 die Darstellung einer Klemmvorrichtung, wie sie bei der Erfindung bevorzugt verwendet wird,

Fig. 2 einen Schnitt, gesehen längs der Linie II-II der Fig. 1,

Fig. 3 einen Schnitt durch ein erstes Ausführungsbeispiel eines erfindungsgemäßen Zusatzgeräts, wobei rechts vom Zusatzgerät die Enden der beiden zu befestigenden Stockabschnitte dargestellt sind,

Fig. 4 eine raumbildliche Darstellung eines als Schaufel ausgebildeten Zusatzgeräts, wobei die Schaufel etwa einen rechten Winkel zu den Stöcken einschließt (Hackstellung der Schaufel),

Fig. 5 eine Darstellung der Schaufel in derselben Stellung wie bei Fig. 4, von der Aufnahmevorrichtung her gesehen,

Fig. 6 eine raumbildliche Darstellung der Schaufel nach den Figuren 3 bis 5, von der Seite her gesehen, in gestreckter Stellung (Schaufel- bzw. Grabstellung), und mit befestigten Stöcken,

Fig. 7 eine vergrößerte, raumbildliche Darstellung analog Fig. 6, aber ohne Stöcke,

Fig. 8 eine raumbildliche Draufsicht auf die Schaufel in der Stellung nach Fig, 6 oder 7, aber ohne Stöcke,

Fig. 9 eine raumbildliche Darstellung eines als Eispickel ausgebildeten Zusatzgeräts, ohne Stöcke,

Fig, 10 und 11 ein zur Verwendung als Lawinensonde ausgebildetes Stockpaar mit abgenommenen Griffen,

Fig. 12 die Stöcke des Stockpaares nach Fig, 10 und 11 vor ihrer Verbindung zu einer Lawinensonde,

Fig. 13 ein zweites Ausführungsbeispiel einer erfindungsgemäßen Aufnahmevorrichtung, die mit einem zusätzlichen Rastglied versehen ist, teilweise im Längsschnitt, gesehen längs der Linie XIII-XIII der Fig. 14,

Fig. 14 eine Draufsicht, gesehen längs der Linie XIV-XIV der Fig. 13,

Fig. 15 eine ungeschnittene Seitenansicht der Aufnahmevorrichtung der Fig. 13 und 14,

Fig. 16 einen Schnitt, gesehen längs der Linie XVI-XVI der Fig. 15,

Fig. 17 eine Darstellung einer Aufnahmevorrichtung analog Fig. 14, aber mit einem eingesetzten Befestigungsglied, und mit zwei zur Befestigung vorgesehenen Skistockabschnitten,

Fig. 18 eine raumbildliche Darstellung einer Schaufel mit einer Aufnahmevorrichtung nach den Fig. 13 - 16, oder nach Fig. 17, in der Grabstellung der Schaufel, und mit zwei an ihr befestigten Skistockabschnitten,

Fig. 19 eine Seitenansicht der Schaufel nach Fig. 18, aber ohne an der Aufnahmevorrichtung befestigte Skistockabschnitte,

Fig. 20 eine Darstellung der Schaufel nach den Fig. 18 und 19 in Hackstellung und mit befestigten Stöcken,

Fig. 21 eine Seitenansicht der Schaufel nach den Fig. 18 - 20, aber in nicht arretierter Stellung und ohne Stöcke,

Fig. 22 eine Draufsicht von unten auf die Schaufel in der Stellung nach Fig. 18 und mit befestigten Stöcken, und

Fig. 23 eine Steitenansicht der Schaufel in der gestreckten Stellung entsprechend Fig. 19 und ohne Stöcke, aber mit einem zur Betätigung befestigten Skistockgriff 44 oder 46 für Arbeiten in engen Räumen, z.B. in Schneehöhlen.

In der nachfolgenden Beschreibung werden gleiche oder gleichwirkende Teile jeweils mit denselben Bezugszeichen bezeichnet und gewöhnlich nur einmal beschrieben. Die Begriffe links, rechts, oben, unten beziehen sich jeweils auf die betreffende Figur.

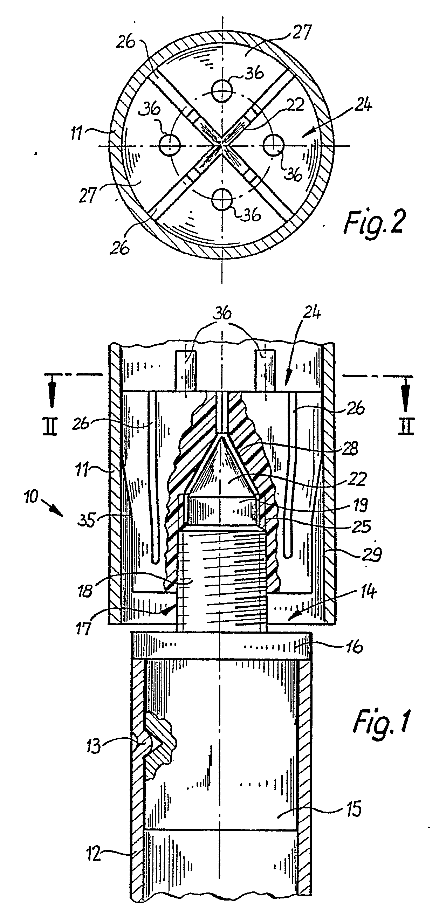

Die in den Fig. 1 und 2 dargestellte Klemmvorrichtung für ein erfindungsgemäßes Zusatzgerät dient bei dieser Darstellung zur Klemmverbindung zweier als Metallrohr ausgebildeter Stöcke 11 und 12. Im oberen Ende des Stockes 12 ist, z.B. wie dargestellt durch eine formschlüssige Verbindung 13, ein einstückiges Formstück 14 befestigt. Sein im Stock 12 befestigter zylindrischer Abschnitt 15 geht über in einen Kragen 16, dessen Außendurchmesser dem des Stockes 12 entspricht. Der Kragen 16 geht seinerseits über in ein bolzenförmiges Spreizteil 17, auf dem ein Außengewinde 18 vorgesehen ist, an das sich ein im Verhältnis zur Gewindelänge kurzer zylindrischer Abschnitt 19 anschließt, dessen Außendurchmesser kleiner ist als der des Gewindeabschnitts des Außengewindes 18. Auf den zylindrischen Abschnitt 19 folgt an der Spitze des bolzenförmigen Spreizteils 17 ein Spreizglied 22 in Form eines Kegels, dessen Spitze, wie dargestellt, bevorzugt einen Winkel von etwa 60° einschließt. Dieser Winkel hat sich in Verbindung mit einer Spreizhülse 24 aus Polyamid als günstig erwiesen, da auf diese Weise ein günstiges, nämlich niedriges Drehmoment für die Bedienung erreicht wird, wozu ferner die auch aus Fig. 1 klar erkennbare kleine Fläche des Spreizglieds 22 beiträgt.

Für das Außengewinde 18 hat sich — ebenfalls in Verbindung mit einer Spreizhülse 24 aus Polyamid — eine Gewindesteigung von h = 1...1,5 mm, vorzugsweise von etwa 1,25 mm, als sehr günstig erwiesen; eine zu große Gewindesteigung führt dazu, daß zur Betätigung der Verstellmechanik sehr erhebliche Drehmomente erforderlich werden, was gewöhnlich unerwünscht ist.

Im unteren Abschnitt der Spreizhülse 24, und etwa auf der Halfte ihrer Länge, ist ein Innengewinde 25 vorgesehen, das zur Aufnahme des Außengewindes 18 dient. Die Spreizhülse 24, die zweckmäßig als einstückiges Spritzgußteil aus Polyamid, ABS, oder einem sonstigen geeigneten Kunststoff hergestellt wird, hat vier Längsschlitze, die jeweils von der Mitte der Spreizhülse 24 aus in radialer Richtung verlaufen und um 90° gegeneinander versetzt sind, wie das Fig. 2 zeigt, Diese Schlitze 26 erstrecken sich vorzugsweise über mindestens 70% der Länge der Spreizhülse 24. Eine bevorzugte Länge liegt dabei im Bereich von 80 - 97% der Länge der Spreizhülse 24, da schon ein relativ kleiner durchgehender Materialquerschnitt am unteren Teil der Spreizhülse 24 ausreicht, um deren einzelnen spreizbaren Abschnitten 27 die erforderliche Elastizität in radialer Richtung zu verleihen und zu bewirken, daß diese Abschnitte 27 mit ausreichender radialer Vorspannung gegen die Innenseite des Stockes 11 anliegen.

Bei einer praktischen Ausführungsform wird z.B. eine bevorzugte Schlitzlänge von etwa 95% verwendet. Die Spreizhülse 24 paßt sich deshalb ohne Schwierigkeiten den in der Praxis vorkommenden Toleranzbereichen für den Stock-Innendurchmesser an.

Anschließend an das Innengewinde 25 befindet sich im Inneren der Spreizhülse 24 ein Abschnitt 28 mit einer Form, die an die Form des Spreizglieds 22 angepaßt ist, bei der dargestellten Ausführungsform also die Gestalt eines Hohlkegels hat. Beim Hineinschrauben des Spreizglieds 22 in die Ausnehmung 28 werden die spreizbaren Abschnitte 27 radial nach außen gespreizt und mit einer erheblichen Kraft großflächig gegen die Innenwand 29 des Stockes 11 gepreßt, so daß dann die beiden Stöcke 11 und 12 in ihrer Lage relativ zueinander sicher fixiert sind. Dabei verhindert der zylindrische Abschnitt 19, daß sich das Außengewinde 18 in die Ausnehmung 28 einfrißt.

Umgekehrt liegen bei der in Fig. 1 dargestellten Lage des Spreizglieds 22 zwar die spreizbaren Abschnitte 27 unter radialer Vorspannung gegen die Innenwand 29 an, doch ist die Reibung zwischen Spreizhülse 24 und Innenwand 29 nur so groß, daß die Stöcke 11 und 12 leicht teleskopartig relativ zueinander verschoben werden können. Dies gilt auch dann, wenn infolge Herstellungstoleranzen der Rohre die Innenwand 29 stellenweise einen kleineren Durchmesser hat, da sich hierbei die radiale Vorspannung der spreizbaren Abschnitte 27 nur geringfügig erhöht. Die ungespannte Spreizhülse 24 kann nämlich z.B. mit der Hand zusammengedrückt werden, hat also keine hohe Federkonstante. — In der Mantellinie 35 der Spreizhülse 24 ist eine Schulter vorgesehen, die als Sperre oder Widerhaken verwendet werden kann.

Zum Längenverstellen wird das Spreizglied 22 etwas aus der Ausnehmung 28 herausgedreht, wozu die beiden Stöcke 11 und 12 gegeneinander verdreht werden müssen. Sodann schiebt man die Stöcke 11, 12 zusammen oder zieht sie auseinander und verdreht sie dann in entgegengesetzter Richtung relativ zueinander, um das Spreizglied 22 in die Ausnehmung 28 einzudrehen, die spreizbaren Abschnitte 27 in radialer Richtung zu spreizen, und so die Stöcke 11 und 12 in ihrer neuen Lage zueinander sicher zu fixieren. Dabei sind sowohl für das Lösen wie für das Spannen der Klemmvorrichtung nur Drehmomente erforderlich, die durch gegenseitiges Verdrehen der beiden Stöcke von Hand erzeugt werden können. Andererseits ist die Klemmung so sicher, daß sie allen Belastungen standhalten kann, die auf einen derartigen Stock in der Praxis einwirken, und auch ein unerwünschtes Lösen der Klemmung ist bei dieser bevorzugten Art der Klemmverbindung nicht zu erwarten.

An ihrer Oberseite hat die Spreizhülse 24 vier angespritzte Zapfen 36, die zum Halten bei der automatischen Montage dienen.

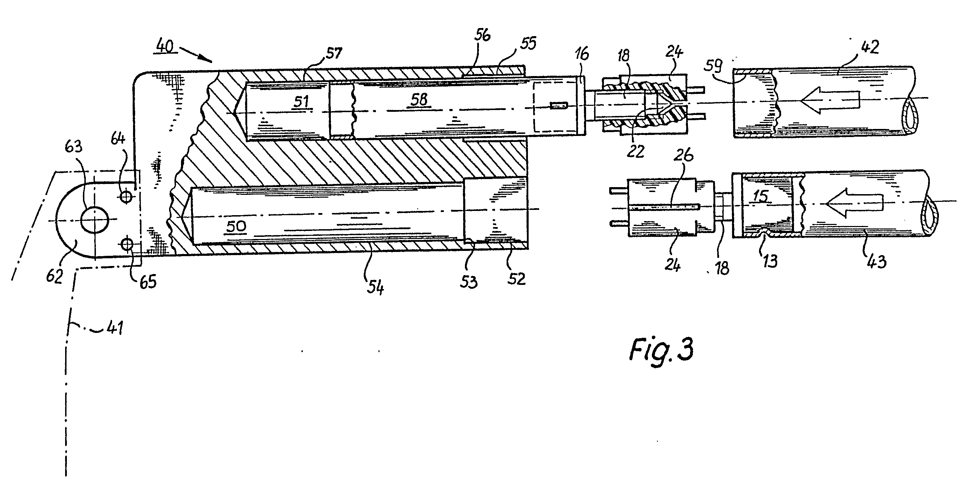

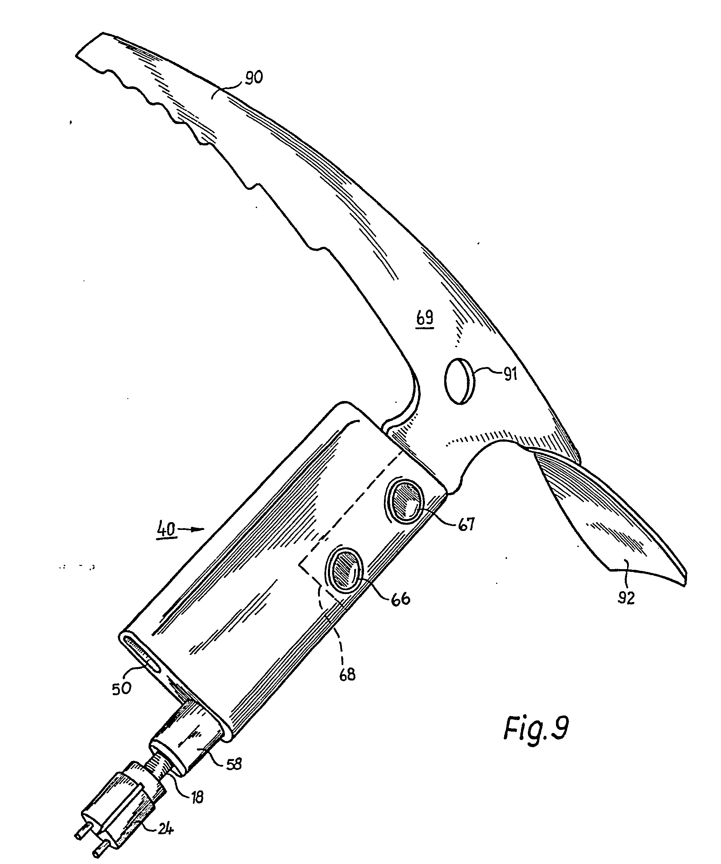

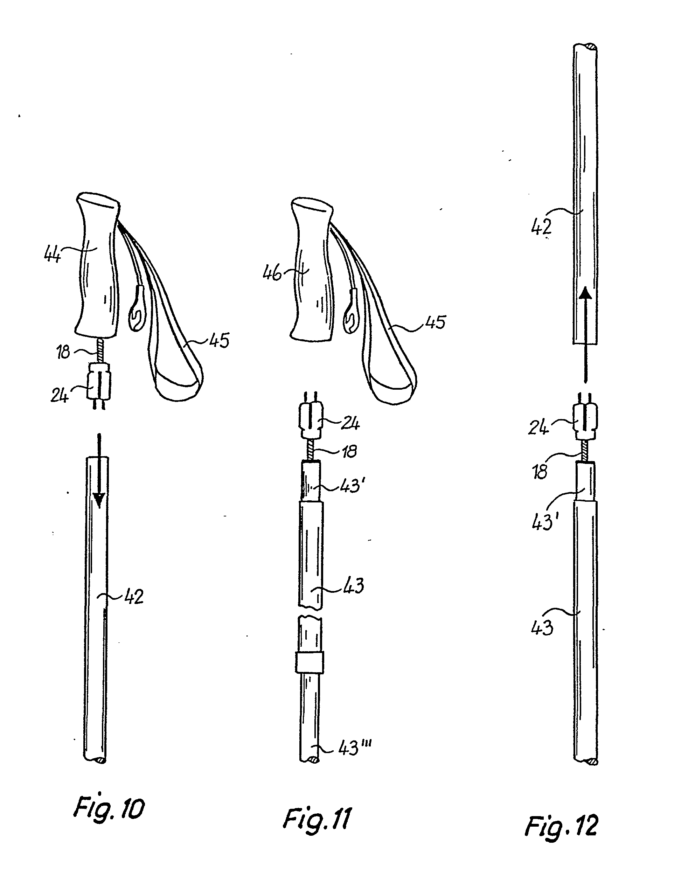

Fig. 3 zeigt eine Aufnahmevorrichtung 40, die dazu dient, ein bei 41 strichpunktiert angedeutetes Gerät, z.B. eine Schaufel, Hacke, Pickel oder dergleichen mit zwei Stöcken 42, 43 zu verbinden, von denen nur die Enden angedeutet sind. Diese Stöcke sind im Normalfall die Stöcke eines Skistockpaares, bei denen die Griffe abgenommen worden sind und die, z.B. beim Biwakieren oder bei der Suche nach Lawinenopfern, nun mit einem geeigneten Zusatzgerät verbunden werden müssen. Die Fig. 10 und 11 zeigen ein solches Stockpaar 42 und 43, aber ohne die Stockspitzen und Teller. Im Normalfall handelt es sich bei diesen Stöcken um sogenannte Verstellstöcke, also Stöcke, die jeweils aus zwei Rohrabschnitten unterschiedlicher Durchmesser bestehen, deren Gesamtlänge mittels einer Klemmvorrichtung analog Fig. 1 in weiten Grenzen veränderbar ist. Dies ist günstig für die passende Einstellung der Stocklänge zum Arbeiten. Bei einer Schaufel bevorzugt man eine größere Stocklänge als bei einem Eispickel, wie ihn Fig. 9 zeigt.

Das Stockpaar 42, 43 der Fig. 10 und 11 ist verschieden ausgebildet. Der Stock 42 ist ein einfaches Rohr, in dessen oberes Ende eine Klemmvorrichtung mit einem Spreizglied 24 eingeführt werden kann, welch letzteres an einem üblichen Handgriff 44 (mit verstellbarer Schlaufe 45) angeordnet ist. Dabei wird einfach das Spreizglied 24 in das obere Ende des Rohres 42 eingeführt und dann der Griff 44 etwa um eine halbe Umdrehung im Uhrzeigersinn verdreht. Dann ist der Griff 44 am Rohr 42 befestigt, und er kann in umgekehrter Richtung durch Umkehr dieser Bewegungsvorgänge wieder gelöst werden.

Umgekehrt ist am oberen Ende des Stockes 43 ein Spreizglied 24 auf dem Gewinde 18 befestigt (genau wie in Fig. 1 für den Stock 12 dargestellt), und der Handgriff 46 dieses Stockes enthält eine rohrförmige Ausnehmung, in der das Spreizglied 24 durch Einführen und Verdrehen befestigt werden kann und aus der es auf dieselbe Weise — durch Umkehr der Bewegungsvorgänge — wieder gelöst werden kann.

Löst man in den Fig. 10 und 11 — wie dargestellt — die Handgriffe 44 und 46, so kann man die Stöcke 42 und 43, wie in Fig. 12 dargestellt, miteinander durch das Spreizglied 24 des Stockes 43 verbinden und erhält dadurch eine über 3 m lange Lawinensonde, nachdem man an einem Stockende den Schneeteller abgenommen hat. Ein Stockpaar gemäß Fig. 10 und 11 ist also sehr günstig für Hochgebirgstouren, da es die Suche nach Lawinenopfern sehr erleichtert, und deshalb bezieht sich die bevorzugte Ausführungsform der Erfindung auf Stockpaare, die analog dem Stockpaar der Fig. 10 und 11 ausgebildet sind. Das bedeutet aber nicht, daß die Erfindung nicht ebenfalls verwendbar wäre in Verbindung mit zwei Stöcken, die beide wie der Stock 42 der Fig. 10 ausgebildet sind, oder in Verbindung mit zwei Stöcken, die beide wie der Stock 43 der Fig. 11 ausgebildet sind. Dies erfordert nur entsprechende Modifikationen der Aufnahmevorrichtung 40. Das bevorzugte Ausführungsbeispiel nach Fig. 3 ist aber abgestellt auf das Lawinensonden-Stockpaar nach den Fig. 10 bis 12 und ergänzt dieses um weitere, für die Lawinensuche nützliche Möglichkeiten, wie man sie besonders bei Hochtouren, Expeditionen, Gebirgstruppen etc. benötigt.

Die Aufnahmevorrichtung 40 ist als flaches Formstück ausgebildet, das zwei parallel verlaufende zylindrische Ausnehmungen 50 und 51 aufweist, die als Sackbohrungen oder durchgehende Bohrungen (zur Gewichtsersparnis) ausgebildet sein können. Die in Fig. 3 untere Ausnehmung 50 hat anschließend an ihre Öffnung einen Abschnitt 52 größeren Durchmessers, der zur satten Aufnahme des Endes des Stockes 43 ausgebildet ist und z.B. 17 mm lang sein kann. Über eine Ringschulter 53, die als Anschlag für das vordere Ende des Stockes 43 dient, geht er über in einen Abschnitt 54, dessen Durchmesser dem Innendurchmesser des Rohres 42 entspricht, so daß das Spreizglied 24 am Ende des Rohres 43 mit Vorspannung gegen die Innenwand des Abschnitts 54 anliegt und in ihm durch Verdrehen des Rohres 43 festgespannt werden kann.

Die obere Ausnehmung 51 hat ebenfalls anschließend an ihre Öffnung einen Abschnitt 55 größeren Durchmessers zur satten Aufnahme des Endes des Rohres 42, und dieser Abschnitt geht über eine — ebenfalls als Anschlag dienende — Ringschulter 56 in einen Abschnitt 57 kleineren Durchmessers über.

Da die Außendurchmesser der Stöcke 42 und 43 im Normalfall identisch sind, sind das auch die Durchmesser und Längen der Abschnitte 52 und 55. Die Abschnitte 54 und 57 haben ebenfalls ähnliche Durchmesser. Im Abschnitt 57 ist mit Preßsitz ein zylindrisches Teil 58 befestigt, das zur Gewichtsersparnis wie dargestellt bevorzugt als Rohr ausgebildet wird und das wie dargestellt aus der oberen Ausnehmung 51 etwa 1,6 cm herausragt. An seinem freien Ende ist, völlig analog zu Fig. 1, ein Spreizteil 18 befestigt, auf dem ein Spreizglied 24 aufgeschraubt ist, das zur Aufnahme in das freie Ende 59 des Rohres 42 ausgebildet ist und in diesem Ende 59 im ungespannten Zustand mit Vorspannung anliegt und durch Verdrehen des Rohres 42 gespannt werden kann, so daß — wie bei Fig. 1 beschrieben — eine Klemmverbindung entsteht. Dabei werden in besonders bevorzugter Weise die Innendurchmesser des Abschnitts 54 und des Rohrendes 59 gleich ausgebildet, damit man überall dasselbe Spreizglied 24 verwenden kann, was z.B. die Ersatzteilhaltung wesentlich vereinfacht und es auf einer Gebirgstour einer größeren Gruppe nur erforderlich macht, 1 oder 2 solche Spreizglieder mitzunehmen.

Die Aufnahmevorrichtung 40 kann an ihrem einen Ende mit einem Befestigungsauge 62 zur Befestigung des Geräts 41 versehen sein. Das Befestigungsauge 62 hat eine Befestigungsbohrung 63 und zwei Arretieröffnungen 64 und 65, die, bezogen auf den Mittelpunkt der Bohrung 63, einen Winkelabstand von etwa 90° haben können. Alternativ kann die Aufnahmevorrichtung 40, wie in Fig. 9 dargestellt, einen Längsschlitz aufweisen, der etwa längs ihrer Mittelebene verläuft und der die Ausnehmung 51 in ihrer Mittelachse schneidet. In diesem Längsschlitz ist, mittels zwei Hohlnieten 66, 67, ein flacher Abschnitt 68 eines Geräts 69, hier eines Eispickels bekannter Konstruktion, befestigt.

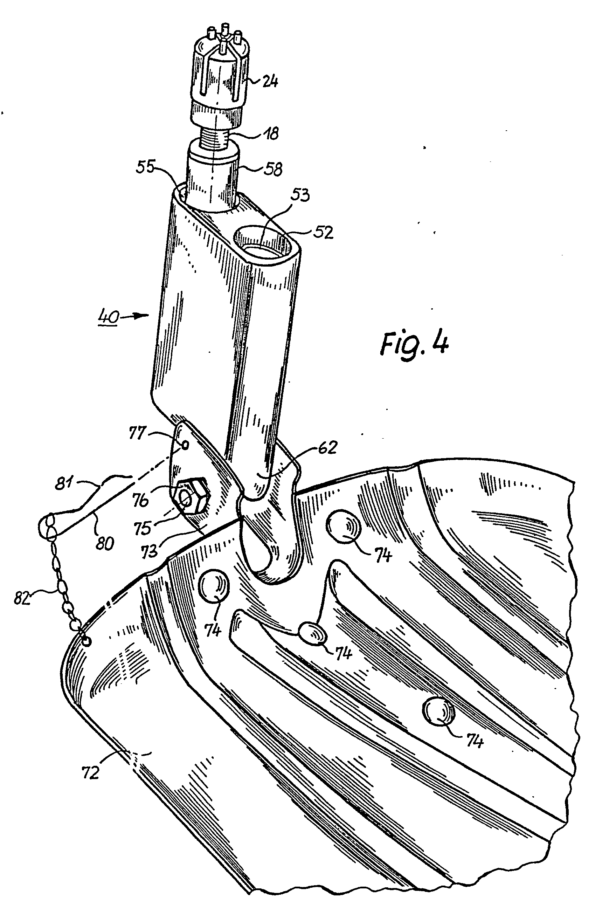

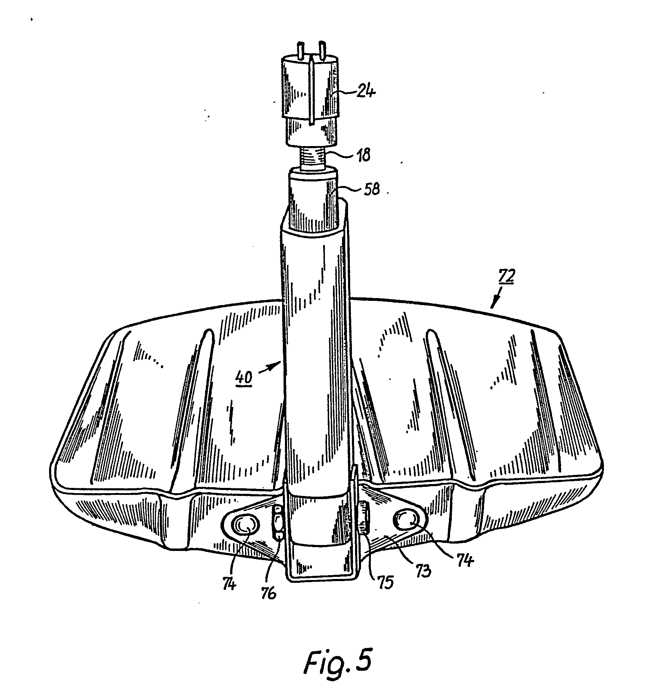

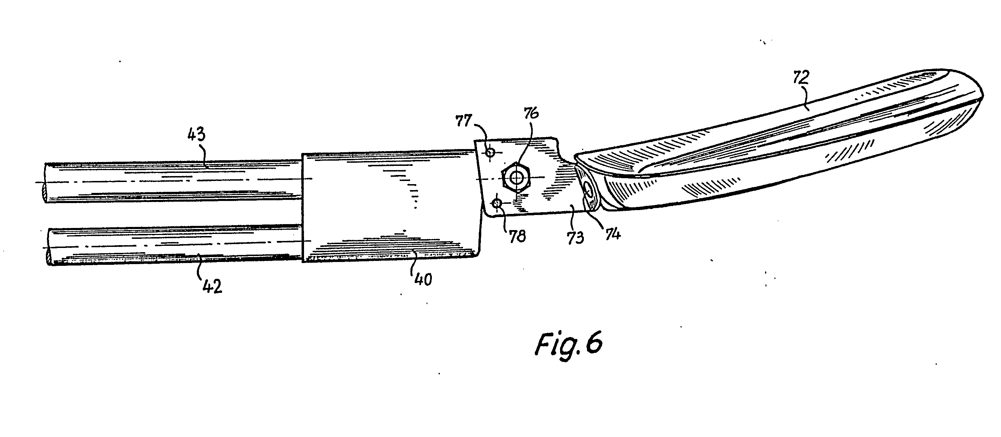

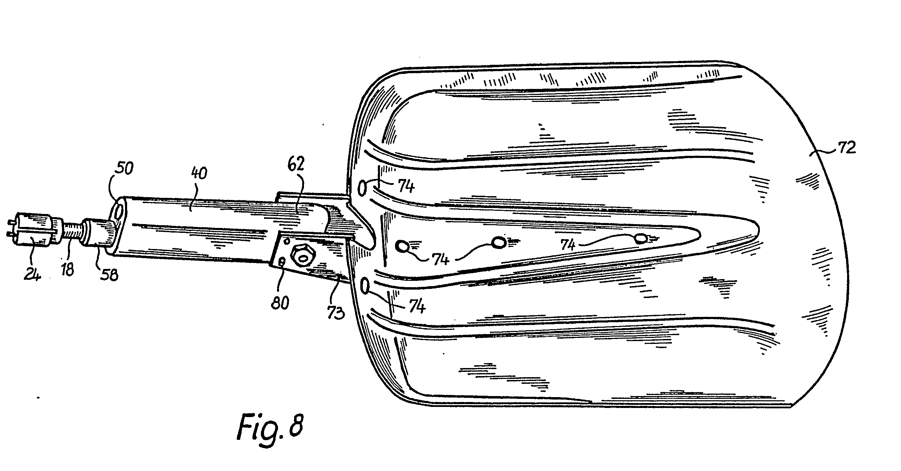

Fig. 4 zeigt die Befestigung einer Schaufel 72, die als tiefgezogenes Formstück aus hartem Aluminium ausgebildet ist, am Befestigungsauge 62 der Aufnahmevorrichtung 40. Die Schaufel 72 ist mit einem Beschlag 73 aus gehärtetem Stahl versehen, der mittels 5 Nieten 74 (Fig. 8) an der Schaufel 72 befestigt ist. Er ist, wie dargestellt, an seinem von der Schaufel 72 abgewandten Ende U-förmig ausgebildet und umfaßt mit diesem Ende das Befestigungsauge 62 und ist mittels einer Schraube 75 und einer Mutter 76 mit diesem Auge 62 drehbar verbunden. Er hat zwei Arretieröffnungen 77 und 78 (Fig. 6), durch die ein gehärteter Arretierstift 80 hindurchgesteckt werden kann, der mit einer Sicherungsfeder 81 versehen und über eine Kette 82 oder dergleichen mit der Schaufel 72 verbunden ist. Der Stift 80 durchdringt dann z.B. in Fig. 4 die Arretieröffnung 77 und die Arretieröffnung 64 und verhindert dadurch eine Verdrehung der Aufnahmevorrichtung 40 relativ zur Schaufel 72. — In Fig. 4 befindet sich die Schaufel 72 in ihrer zum Hacken bestimmten Stellung, ebenso in Fig. 5. Fig. 5 läßt noch besser die Form des Beschlags 73 erkennen, der praktisch als Rückgrat der Schaufel 72 wirkt und dieser eine hohe Formfestigkeit verleiht.

Fig. 6 zeigt die Schaufel 72 in ihrer zum Schaufeln oder Graben dienenden gestreckten Stellung, und es sind die beiden Stöcke 42 und 43 in ihrer am Aufnahmeglied 40 befestigten Stellung dargestellt, in der sie parallel zueinander verlaufen und leicht mit der Hand umfaßt werden können. Dabei ergeben sich vor alle 3 Vorteile, die alle von großer Wichtigkeit sind:

a) Man kann die Stöcke 42, 43 gut mit der Hand umgreifen und hat einen sehr sicheren Griff an ihnen, so daß man mit einem solchen Gerät ausgezeichnet arbeiten kann. (Die in Fig. 6 nicht sichtbaren freien Enden der Stöcke können dadurch miteinander verbunden werden, daß man eine Stockspitze in ein Loch des Schneetellers des anderen Stockes steckt. Dadurch erhält man eine Parallelführung.) Praktische Versuche haben gezeigt, daß man mit einem solchen Stockpaar ausgezeichnet arbeiten kann, d.h. ein Stockpaar ist ergonomisch ungleich günstiger als ein Einzelstock.

b) Würde nur ein Einzelstock mit einer Klemmverbindung an der Aufnahmevorrichtung befestigt, so würde sich die Klemmverbindung durch die Belastungen bei der Arbeit wahrscheinlich schnell wieder lösen, und es wäre kein sicheres Arbeiten möglich. Bei der Erfindung dagegen wird die Kombination von zwei Stöcken mit einem bei der Arbeit auftretenden Drehmoment belastet, d.h. die Klemmverbindungen werden nicht in Richtung auf Öffnung beansprucht.

c) Die Belastung durch die Arbeit verteilt sich auf zwei Stöcke, d.h. die Gefahr der Beschädigung eines Stockes durch übermäßige Belastung wird ganz wesentlich reduziert.

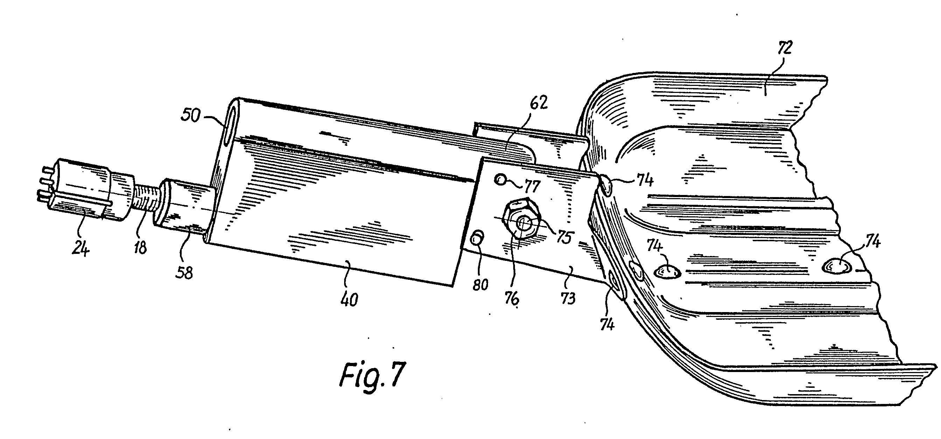

Die Fig. 7 und 8 zeigen ebenfalls die Schaufel 72 in ihrer gestreckten Stellung und aus verschiedenen Blickwinkeln.

Fig. 9 zeigt, wie bereits beschrieben, einen Eispickel 69 mit einer Eingriffsspitze 70, einer Befestigungsöse 91 und einer durch Verdrehung entstandenen Hackspitze 92. Die Befestigung erfolgt in der bereits beschriebenen Weise mittels zwei Hohlnieten 67, 68 in einem Längsschlitz der Aufnahmevorrichtung 40.

Besonders vorteilhaft ist die Verwendung eines Eispickels nach Fig. 9 in Verbindung mit längenverstellbaren Stöcken der bereits beschriebenen Art, da hierbei die Verwendung einer Stocklänge optimal ist, wie sie der üblichen Länge des Schafts eines Eispickels entspricht, wobei zweckmässig die Teller entfernt werden, wie das bei bestimmten Skistockausführungen des Anmelders sehr einfach möglich ist.

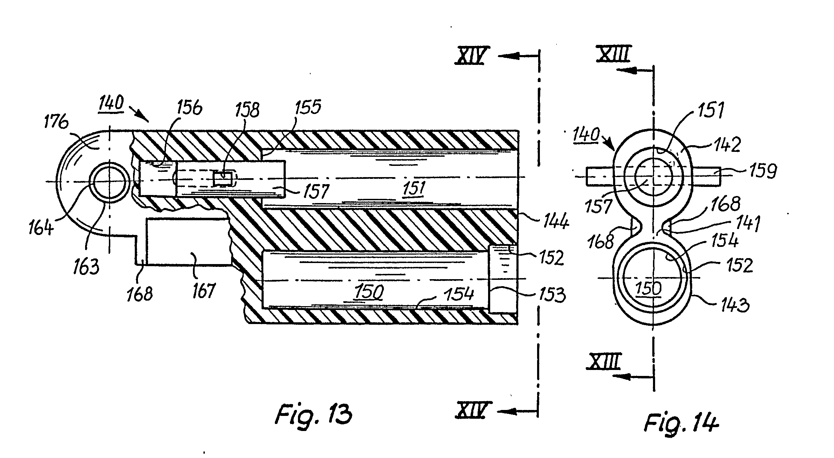

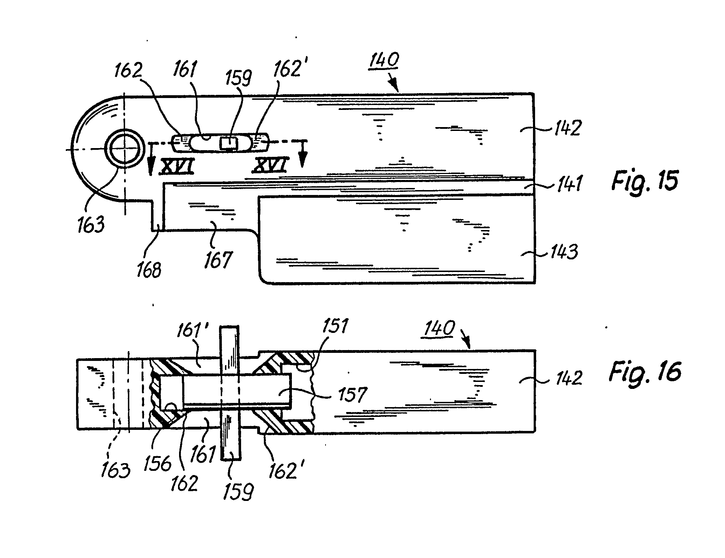

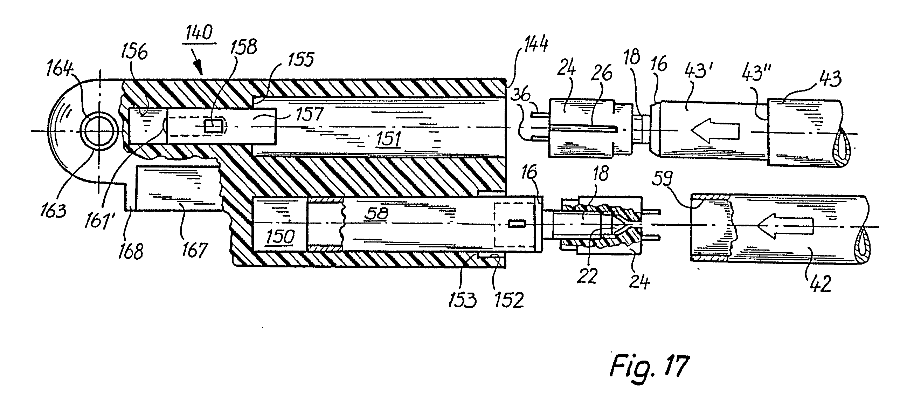

Fig. 13 zeigt eine Aufnahmevorrichtung 140 nach einem zweiten Ausführungsbeispiel der Erfindung. Diese Vorrichtung ist ähnlich aufgebaut wie die Aufnahmevorrichtung 40 der Fig. 3. Ihre Verwendung zur Befestigung einer Schaufel wird nachfolgend anhand der Fig. 13 - 23 ausführlich erläutert. Wie Fig. 14 zeigt, besteht die Aufnahmevorrichtung 140 im wesentlichen aus zwei längs einer Mantellinie durch einen Steg 141 miteinander verbundenen rohrförmigen Teilen 142, 143, die miteinander einstückig und z.B. aus einem Polyamid ausgebildet sind, aber auch aus Metall bestehen können. Die rohrförmigen Teile 142, 143 verlaufen parallel zueinander. Im Teil 142 ist eine zylindrische Ausnehmung 151 vorgesehen, und im Teil 143 eine zylindrische Ausnehmung 150. Beide sind als Sackbohrungen ausgebildet. Die untere Ausnehmung 150 hat anschließend an ihre Öffnung einen Abschnitt 152 größeren Durchmessers, der über eine Ringschulter 153, welche als Anschlag für das vordere Ende eines Stockes 42 (vgl. Fig. 17) dient, in einen Abschnitt 154 kleineren Durchmessers übergeht.

Die obere Ausnehmung 151 hat überall denselben Innendurchmesser, der dem Außendurchmesser eines in das oberste Ende des Stockabschnitts 43 (Fig. 11 und 12) eingesetzten Rohrstücks 43' (vgl. Fig. 17) entspricht, an dessen vorderem Ende das (in Fig. 17 nicht dargestellt) Formstück 15 ebenso befestigt ist, wie das Fig. 1 zeigt. Die Schulter 43'' am Übergang vom Stockabschnitt 43 zum Rohrstück 43' dient als Anschlag und liegt nach dem Einschieben gegen die in Fig. 13 rechte Stirnwand 144 der Aufnahmevorrichtung 140 an. Das Spreizglied 24 (Fig. 17) hat etwa denselben Außendurchmesser wie das Rohrstück 43' und wie der Abschnitt 154 der Ausnehmung 150, so daß der Stockabschnitt 43 auch in der Ausnehmung 150 befestigt werden könnte, was sehr vorteilhaft ist. In diesem Fall kann auch die untere Ausnehmung 151 überall denselben Durchmesser haben.

Die Ausnehmung 151 geht nach links über eine Ringschulter 155 über in eine Ausnehmung 156 kleineren Durchmessers, in der ein Schieber 157 axial verschiebbar angeordnet ist, und zwar so, daß in seiner nach rechts verschobenen Endlage, wie sie Fig. 13 zeigt, der Schieber 157 in die Ausnehmung 151 ragt, z.B. wie dargestellt 7 mm.

Quer durch den Schieber 157 und durch eine Ausnehmung 158 desselben erstreckt sich ein als Rastglied dienender Stab 159. Zu seiner Durchführung ist die Aufnahmevorrichtung 140 auf beiden Seiten mit je einem Langloch 161 bzw. 161' versehen; die Längsenden 162, 162' dieser Langlöcher erweitern sich, wie dargestellt, trompetenförmig nach außen hin. Diese Erweiterungen dienen dazu, ein Festsetzen von Eis oder Schnee an diesen Längsenden zu vermeiden, was bei Arbeiten in Eis und Schnee wichtig ist, um ein Blockieren des Stabes 159 durch Eisbildung etc. zu verhindern. Wie dargestellt, wird hierzu zweckmäßig ein großer Trompeten-Öffnungswinkel von z.B. 45° gewählt. Beim dargestellten Ausführungsbeispiel kann der Schieber 157 und damit der als Rastglied dienende Querstab 159 um ca. 1 cm in Längsrichtung der Aufnahmevorrichtung 140 verschoben werden. Dies gilt jedoch nur, wenn das Rohrstück 43' (Fig. 17) nicht in die Ausnehmung 151 eingeführt und dort durch Spreizen des Spreizgliedes 24 arretiert ist. Wird nämlich das Rohrstück 43' in der Ausnehmung 151 arretiert, so drücken die Zapfen 36 am freien Ende des Spreizgliedes 24 gegen das rechte Ende des Schiebers 157 und verschieben diesen nach links und arretieren ihn dort in seiner linken Endlage.

An dem in Fig. 13 linken Ende der Aufnahmevorrichtung 140 befindet sich eine Befestigungsbohrung 163, in der ggf. eine Führungshülse 164 aus Metall angeordnet werden kann.

Wie dargestellt, ist das rohrförmige Teil 143 kürzer als das rohrförmige Teil 142. Das rohrförmige Teil 143 geht an seinem in Fig. 13 linken Ende über in eine Verstärkungsrippe 167, an deren linkem Ende ein Anschlag 168 vorgesehen ist.

Die Aufnahmevorrichtung 140 der Fig. 13 eignet sich zur Verbindung mit einem Teleskopstock der in Fig. 11 dargestellten Art. Der obere Stockabschnitt 43 wird mit seinem Rohrstück 43' z.B. in die Ausnehmung 151 eingeführt und dort durch Spreizen des Spreizglieds 24 arretiert. Der untere Rohrabschnitt 43''' wird — nach Lösen der Spreizverbindung des am unteren Stockabschnitts 43''' befestigten und nicht dargestellten Spreizglieds — aus dem oberen Stockabschnitt 43 herausgezogen und dann z.B. in der Ausnehmung 150 befestigt. Man benötigt dann nur einen der beiden Skistöcke für die Schaufel oder den Eispickel und kann den anderen Skistock als Lawinensonde verwenden. Dies erhöht die Vielseitigkeit, besonders im Hochgebirge, wo keine anderen Hilfsmittel zur Verfügung stehen.

Alternativ kann aber auch gemäß Fig. 17 in der Ausnehmung 150 ein zylindrisches Teil 58 befestigt werden, das mit dem zylindrischen Teil 58 der Fig. 3 identisch ist und genau wie dieses ein Spreizglied 24 trägt, weshalb es nicht nochmals beschrieben wird. Auf diesem Spreizglied 24 kann dann der Stockabschnitt 42 der Fig. 11 befestigt werden, wobei dieser Stockabschnitt dann bis zum Anschlag 153 in die auf seine Dimensionen abgestimmte Ausnehmung 152 eingeschoben wird. In diesem Fall werden zwei Skistöcke benötigt, was in den meisten Fällen kein Hindernis darstellt.

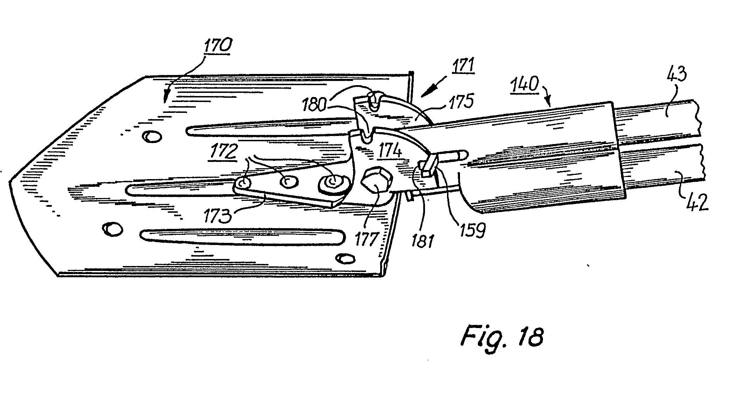

Fig. 18 zeigt die Aufnahmevorrichtung 140 an einer Schaufel 170. An dieser ist in der Mitte ein Beschlagteil 171 befestigt. Dieses Beschlagteil 171 hat einen zur Schaufel 170 parallel verlaufenden zungenartigen Abschnitt 173, der, wie dargestellt, mittels Nieten 172 an der Schaufel 170 befestigt ist. Von diesem zungenartigen Abschnitt 173 sind zwei parallel zueinander verlaufende flache Abschnitte bzw. Lappen 174 und 175 hochgebogen, zwischen denen der in Fig. 13 linke Endabschnitt 176 der Aufnahmevorrichtung 140 spielfrei angeordnet ist. Ein Schraubenbolzen 177, von dem nur der Kopf dargestellt ist, erstreckt sich durch zwei (nicht dargestellte) Bohrungen der Abschnitte 174 und 175 und durch die Hülse 164 der Aufnahmevorrichtung 140 und lagert so die Aufnahmevorrichtung 140 verschwenkbar am Beschlag 171.

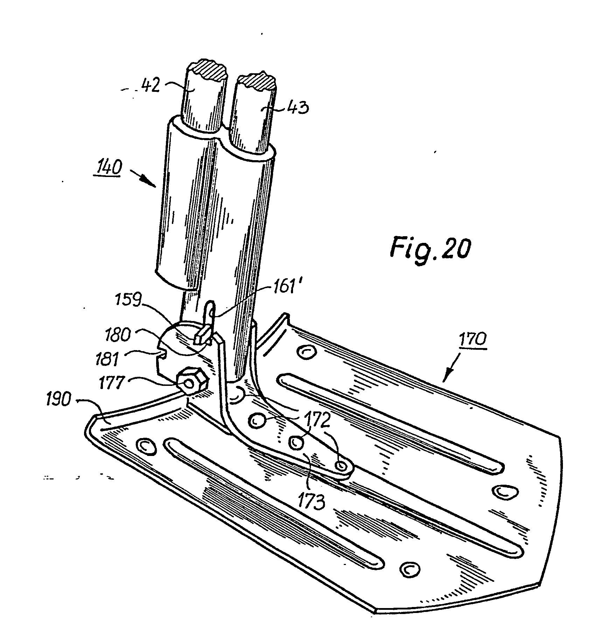

Jeder der flachen Abschnitte 174, 175 des Beschlags 171 ist an seinem Außenumfang, der einen Kreisabschnitt darstellt, mit zwei Rastausnehmungen 180, 181 versehen, in die das Rastglied 159 der Aufnahmevorrichtung 140 einrasten kann. In Fig. 18 ist das Rastglied 159 in die untere Rastausnehmung 181 eingerastet, und daher ist die Schaufel 170 in ihrer gestreckten Stellung, wie man sie zum Graben verwendet. Fig. 20 zeigt das Rastglied 159 in den Rastausnehmungen 180, wobei sich die Schaufel 170 in ihrer etwa unter einem rechten Winkel abgewinkelten Hackstellung befindet. Die Umstellung von der einen zur anderen Stellung ist also sehr einfach, aber es muß jedesmal der Stock in der Ausnehmung 151 gelöst werden, damit das Rastglied 159 aus der Rastausnehmung 180 oder 181 herausgeschoben werden kann und eine Umstellung möglich ist. Hierdurch wird verhindert, daß sich das Rastglied 159 in unerwünschter Weise verschieben kann.

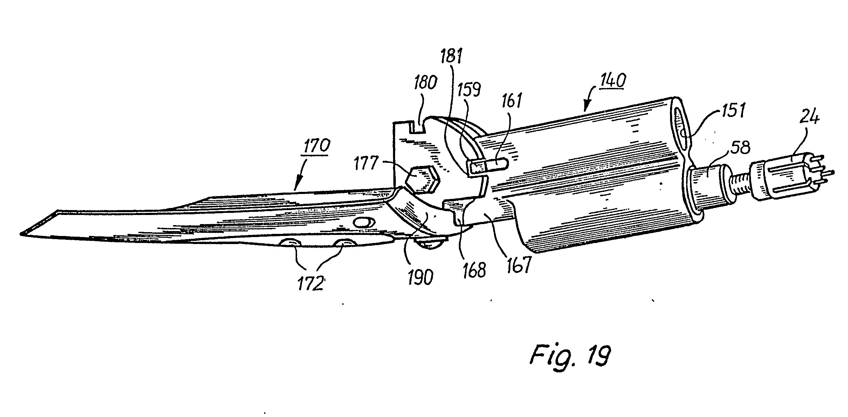

Fig. 19 zeigt ebenfalls die Schaufel 170 in ihrer gestreckten Stellung. Man erkennt, daß ihr hinterer Rand 190 in dieser Stellung am Anschlag 168 der Aufnahmevorrichtung 140 direkt anliegt und durch diesen Anschlag beim Graben zusätzlich abgestützt wird. Hierdurch wird eine direkte Krafteinleitung in die Aufnahmevorrichtung 140 erzielt, was sehr vorteilhaft ist.

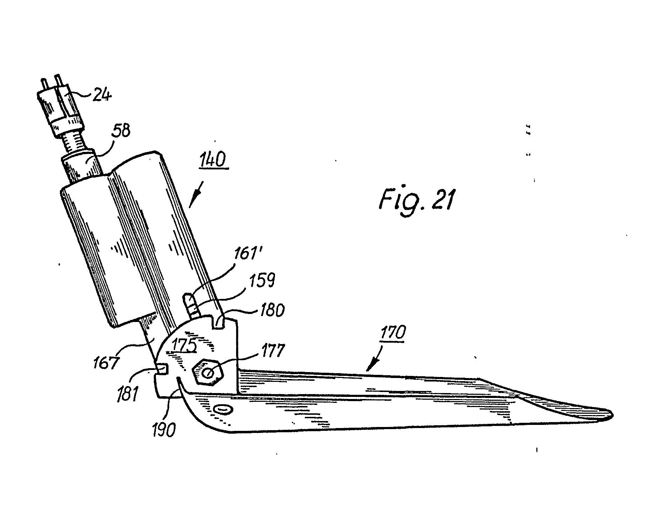

Fig. 21 zeigt das Rastglied 159 in seiner ausgerasteten Stellung, in der die Aufnahmevorrichtung 140 relativ zur Schaufel 170 verdreht und zum Transport zusammengefaltet werden kann. Naturgemäß kann man weitere Rastausnehmungen in den flachen Abschnitten 174, 175 vorsehen und dadurch weitere Raststellungen ermöglichen, z.B. bei anderen Werkzeugen. Fig. 21 zeigt auch, daß sich die flachen Abschnitte 174, 175 über den hinteren Rand 190 der Schaufel hinaus nach hinten erstrecken. Der Abstand der Rastausnehmungen vom Mittelpunkt des Bolzens 177 darf nicht zu klein sein und ist zweckmäßig größer als 20 mm, damit an den Raststellen keine zu hohen Kräfte auftreten.

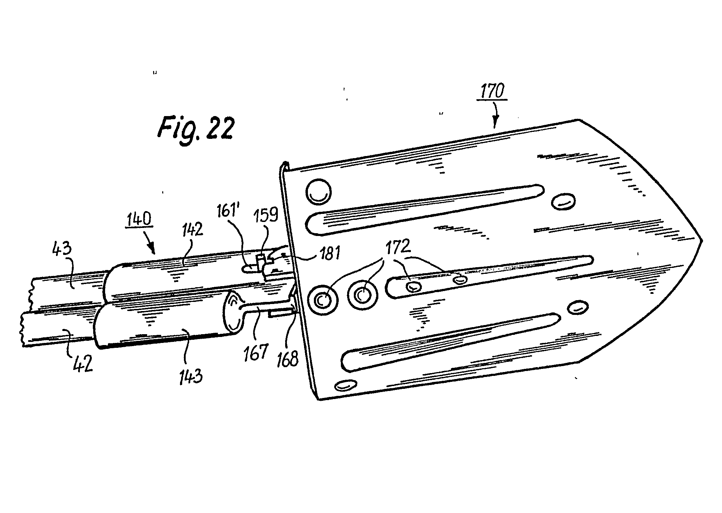

Fig. 22 zeigt eine Draufsicht von unten auf die gestreckte Schaufel. Man erkennt die Verstärkungsrippe 167 und den Anschlag 168, der am hinteren Rand der Schaufel 170 anliegt.

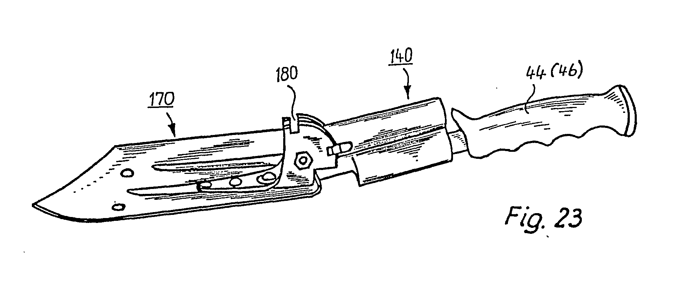

Fig. 23 zeigt die Schaufel 170 ebenfalls in ihrer gestreckten Stellung. Hierbei ist ein Stockhandgriff 44 oder 46 an der Aufnahmevorrichtung 140 befestigt. Bei der Ausführungsform nach Fig. 13 kann der Handgriff 44 nach Fig. 10 entweder in der Ausnehmung 150 oder der Ausnehmung 151 befestigt werden, was ohne weiteres ersichtlich ist. Wird er in der Ausnehmung 151 befestigt, so kann in diese etwas zusammengerolltes Papier eingeschoben werden, damit der Schieber 157 nach links verschoben wird und das Rastglied 159 in die Rastausnehmungen eingreift. Bei der Ausführungsform nach Fig. 17 kann entweder der Handgriff 44 in der Ausnehmung 151 befestigt werden, oder es kann der Handgriff 46 (Fig. 11) auf dem Spreizglied 24 der Aufnahmevorrichtung 140 befestigt werden. Man erhält dann eine sehr kompakte Schaufel, mit der man in Schneehöhlen etc. arbeiten kann.

Die Erfindung schafft also die Möglichkeit, Skistöcke nach Art eines Baukastensystems als Lawinensonde zu verwenden oder sie als Stiel für eine Schaufel oder als Schaft für einen Eispickel zu verwenden, oder für beliebige andere Geräte, je nach den auftretenden Erfordernissen. Für den Benutzer, z.B. einen Hochtouristen oder auch einen Autofahrer ergibt sich so eine wesentliche Gewichtsersparnis bei optimaler Funktion, auch bei großer Kälte und unter den erschwerten Bedingungen des Hochgebirges oder arktischer/ antarktischer Gebiete.

**Patentansprüche**

1. Arbeits-Zusatzgerät, insbesondere Eispickel oder Schaufel, mit einer Vorrichtung zur Befestigung an einem Stock nach Art eines Geh- oder Skistocks, oder an einem Element eines solchen Stocks, dadurch gekennzeichnet, daß das Zusatzgerät (69, 72) eine Aufnahmevorrichtung (40; 140) aufweist, welche mit Ausnehmungen (50, 51; 150, 151) zur passenden Aufnahme und parallelen Befestigung von zwei jeweils aus einem Metallrohr ausgebildeten Stöcken (42, 43) oder Stockelementen versehen ist.

2. Arbeits-Zusatzgerät nach Anspruch 1, dadurch gekennzeichnet, daß die Aufnahmevorrichtung (40; 140) zur Befestigung der beiden aus einem Metallrohr ausgebildeten Stöcke (42, 43) oder Stockelemente in einem solchen Abstand voneinander ausgebildet ist, daß diese mit einer Hand umfaßbar sind.

3. Arbeits-Zusatzgerät nach Anspruch 1 oder 2, dadurch gekennzeichnet, daß die Aufnahmevorrichtung (40; 140) mit mindestens einer bei der Montage in den zugeordneten Metallstock (42) ragenden Klemmvorrichtung (18, 24) versehen ist, welche einen Spreizkonus (22) und ein von diesem bei Betätigung spreizbares und dann gegen die Innenwand (59) dieses Metallrohres (42) anliegendes Spreizglied (24) aufweist.

4. Arbeits-Zusatzgerät nach mindestens einem der Ansprüche 1 bis 3, dadurch gekennzeichnet, daß die Aufnahmevorrichtung (40; 140) mindestens eine Ausnehmung (54; 150, 151) zur Aufnahme einer an einem Stock (43) oder Stockelement (43''') angeordneten Klemmvorrichtung aufweist, welche einen Spreizkonus (22) und ein von diesem bei Betätigung spreizbares und dann gegen die Innenwand dieser Ausnehmung anliegendes Spreizglied (24) aufweist.

5. Arbeits-Zusatzgerät nach Anspruch 3 oder 4, dadurch gekennzeichnet, daß die Aufnahmevorrichtung (40; 140) mit einer Ausnehmung (52, 55; 152) zur satten Aufnahme eines Endes des als Metallrohr ausgebildeten Stockes (42, 43) oder Stockelements versehen ist.

6. Arbeits-Zusatzgerät nach mindestens einem der vorhergehenden Ansprüche, dadurch gekennzeichnet, daß die Aufnahmevorrichtung (40; 140) als Formstück ausgebildet und bevorzugt mit Mitteln zur Befestigung des von ihr gehaltenen Geräts (69; 72; 170) versehen ist.

7. Arbeits-Zusatzgerät nach Anspruch 6, dadurch gekennzeichnet, daß die Befestigungsmittel als schlitzartige Ausnehmung ausgebildet sind, in welcher bevorzugt ein flacher Abschnitt (68) eines Eispickels (69) befestigt ist (Fig. 9).

8. Arbeits-Zusatzgerät nach mindestens einem der Ansprüche 1 bis 6, dadurch gekennzeichnet, daß die Aufnahmevorrichtung (40; 140) mit einem Vorsprung (62; 176) zur Halterung und insbesondere drehbaren Halterung des an ihr angeordneten Geräts (41; 170), insbesondere einer Schaufel, ausgebildet ist.

9. Arbeits-Zusatzgerät nach mindestens einem der vorhergehenden Ansprüche, dadurch gekennzeichnet, daß Mittel (77, 80; 159, 180, 181) zur Arretierung einer Schaufel (72; 170) oder dergleichen an der Aufnahmevorrichtung (40; 140) vorgesehen sind, welche eine Arretierung der Schaufel (72; 170) oder dergleichen in verschiedenen Winkelstellungen relativ zur Aufnahmevorrichtung (40; 140), insbesondere in einer Schaufelstellung und einer Hackstellung, ermöglichen.

10. Arbeits-Zusatzgerät nach Anspruch 9, dadurch gekennzeichnet, daß in der Aufnahmevorrichtung (140) ein Schieber (157) vorgesehen ist, der mit Rastmitteln (159) zur selektiven Einrastung in mindestens eine an der Schaufel (72; 170) oder dergleichen vorgesehenen Rastausnehmung (180, 181) versehen ist.

11. Arbeits-Zusatzgerät nach Anspruch 10, dadurch gekennzeichnet, daß der Schieber (157) in Fortsetzung einer in der Aufnahmevorrichtung (140) vorgesehenen Ausnehmung (151) angeordnet und durch ein in diese Ausnehmung (151) eingeschobenes Skistockelement (43) oder dergleichen in einer Raststellung fixierbar ist.

12. Arbeits-Zusatzgerät nach Anspruch 10 oder 11, dadurch gekennzeichnet, daß der Schieber (157) in Längsrichtung der Aufnahmevorrichtung (140) verschiebbar ist und ein quer zu ihm verlaufendes Rastglied (159) aufweist, das durch mindestens eine seitliche Öffnung (161, 161') der Aufnahmevorrichtung (140) herausragt und durch Verschieben des Schiebers (157) in seine Raststellung bringbar oder aus ihr herausführbar ist.

13. Arbeits-Zusatzgerät nach mindestens einem der vorhergehenden Ansprüche, dadurch gekennzeichnet, daß die Aufnahmevorrichtung (40; 140) eine Ausnehmung (50; 151) zur Aufnahme einer an einem Stock (43) angeordneten Klemmvorrichtung (24) und eine Ausnehmung (51; 150) aufweist, in der eine Klemmvorrichtung (24) zur Aufnahme in einem dieser Ausnehmung zugeordneten, rohrförmig ausgebildeten Stock oder Stokelement (42) vorgesehen ist, welch letztere Klemmvorrichtung bevorzugt aus der ihr zugeordneten Ausnehmung (51; 150) herausragt und hierzu bevorzugt auf einem in dieser Ausnehmung (51; 150) befestigten Halteglied (58), insbesondere einem in diese Ausnehmung (51) eingepreßten Rohr, angeordnet ist.

14. Arbeits-Zusatzgerät nach mindestens einem der Ansprüche 3 bis 5 oder nach Anspruch 13, dadurch gekennzeichnet, daß die Klemmvorrichtung (24) der Aufnahmevorrichtung (40; 140) und die Klemmvorrichtung des Stockes (43) im wesentlichen identisch ausgebildet sind.

**Revendications**

1. Instrument auxiliaire de travail, en particulier piolet à glace ou pelle, avec un dispositif de fixation à un bâton, du type canne de marche ou bâton de ski, ou bien à un élément de ce bâton, caractérisé en ce que l'instrument auxiliaire (69, 72) présente un dispositif récepteur (40; 140) qui est doté d'évidements (50, 51; 150, 151) destinés à recevoir et à fixer en parallèle deux bâtons (42, 43) ou éléments de bâtons constitués chacun d'un tube métallique.

2. Instrument auxiliaire de travail selon la revendication 1, caractérisé en ce que le dispositif récepteur (40; 140) servant à la fixation des deux bâtons (42, 43) ou des deux éléments de bâton constitués d'un tube métallique est conçu avec un intervalle tel que ceux-ci pouvent être pris d'une seule main.

3. Instrument auxiliaire de travail selon la revendication 1 ou la revendication 2, caractérisé en ce que le dispositif récepteur (40; 140) est doté d'au moins un dispositif de serrage (18, 24), qui, au moment du montage, s'engage dans le bâton métallique (42) correspondant et qui présente un cône expansible (22) ainsi qu'un élément expansible (24) actionné par ce cône et s'appuyant contre la paroi intérieure (59) de ce tube métallique (42).

4. Instrument auxiliaire de travail selon l'une des revendications 1 à 3, caractérisé en ce que le dispositif récepteur (40; 140) présente au moins un évidement (54; 150, 151) destiné à recevoir un dispositif de serrage qui est disposé sur un bâton (43) ou un élément de bâton (43''') et qui présente un cône expansible (22) et un élément expansible (24) actionné par ce cône et s'appuyant contre la paroi intérieure (59) de cet évidement.

5. Instrument auxiliaire de travail selon la revendication 3 ou la revendication 4, caractérisé en ce que le dispositif récepteur (40; 140) est doté d'un évidement (52, 55; 152) destiné à recevoir une extrémité du bâton (42, 43) ou de l'élément de bâton constitué d'un tube métallique, de manière à ce que l'extrémité remplisse entièrement l'évidement.

6. Instrument auxiliaire de travail selon au moins l'une des revendications précédentes, caractérisé en ce que le dispositif récepteur (40; 140) est conçu sous la forme d'une pièce moulée et est doté de préférence de moyens de fixation de l'instrument (69; 72; 170) qu'il sert à maintenir.

7. Instrument auxiliaire de travail selon la revendication 6, caractérisé en ce que les moyens de fixation sont conçus comme des évidements en forme de fente, dans laquelle est fixée, de préférence, une partie plate (68) d'un piolet à glace (69) (Fig. 9).

8. Instrument auxiliaire de travail selon au moins l'une des revendications 1 à 6, caractérisé en ce que le dispositif récepteur (40; 140) est conçu avec une partie faisant saillie (62; 176) de manière à constituer un support, en particulier un support rotatif, pour l'instrument (41; 170), en particulier une pelle, qui est disposé sur ce dispositif récepteur.

9. Instrument auxiliaire de travail selon au moins l'une des revendications précédentes, caractérisé en ce que, sur le dispositif récepteur, sont prévus des moyens (77, 80; 159, 180, 181) de blocage d'une pelle (72; 170) ou d'un autre instrument similaire, permettant un blocage de la pelle (72; 170) ou d'un autre instrument similaire dans différentes positions angulaires par rapport au dispositif récepteur (40; 140), en particulier dans une position de pelletage et une position de piochage.

10. Instrument auxiliaire de travail selon la revendication 9, caractérisé en ce que dans le dispositif récepteur (140), il est prévu un poussoir (157) qui est doté de moyens de crantage (159) permettant le crantage sélectif dans au moins un évidement de crantage (180, 181) prévu sur la pelle (72; 170) ou sur un autre instrument similaire.

11. Instrument auxiliaire de travail selon la revendication 10, caractérisé en ce que le poussoir (157) est disposé à la suite d'un évidement (151) prévu dans le dispositif récepteur (141) et peut être fixé dans une position de crantage par un élément de bâton de ski (43), ou similaire, inséré dans cet évidement (151).

12. Instrument auxiliaire de travail selon la revendication 10 ou la revendication 11, caractérisé en ce que le poussoir (157) est mobile dans le sens de la longueur du dispositif récepteur et qu'il présente, passant transversalement à lui, un élément de crantage (159) qui ressort par au moins une ouverture latérale (160, 161') du dispositif récepteur (140) et qui peut être amené dans sa position de crantage ou être sorti de cette position par déplacement du poussoir (157).

13. Instrument auxiliaire de travail selon au moins l'une des revendications précédentes, caractérisé en ce que le dispositif récepteur (40; 140) présente un évidement (50; 151), destiné à recevoir un dispositif de serrage (24) disposé sur un bâton (43), et un évidement (51; 150) dans lequel est prévu un dispositif de serrage (24) destiné à être logé dans un bâton ou élément de bâton (42) de forme tubulaire et affecté à cet évidement, ce dernier dispositif de serrage ressortant de préférence de l'évidement qui lui est affecté (51; 150) et étant pour ce faire, de préférence, disposé sur un élément support (58) fixé dans cet évidement (51; 150), en particulier sur un tube inséré par pression dans cet évidement (51).

14. Instrument auxiliaire de travail selon au moins l'une des revendications 3 à 5 ou selon la revendication 13, caractérisé en ce que le dispositif de serrage (24) du dispositif récepteur (40; 140) et le dispositif de serrage du bâton (43) sont conçus pour l'essentiel de manière identique.

**Claims**

1. Add-on tool, in particular ice axe or shovel, with a device for attaching it to a stick in the form of a walking stick or ski pole or to an element of such a stick, characterized in that the add-on tool (69, 72) has a receiving element (40; 140) which is provided with recesses (50, 51; 150, 151) for suitably receiving and parallel fastening of two sticks (42, 43) or stick elements each consisting of a metal pipe.

2. Add-on tool in accordance with claim 1, characterized in that the receiving element (40; 140) for the fastening of the two sticks (42, 43) or stick elements made from a metal pipe is formed at such a distance from each other that they can be grasped by one hand.

3. Add-on tool in accordance with claim 1 or 2, characterized in that the receiving element (40; 140) is provided with at least one clamping device (18, 24) which during mounting extends into the associated metal stick (42) and which has a spreading cone (22) and a spreading member (24), which spreads when actuated by it and then lies against the interior surface (59) of this metal pipe (42).

4. Add-on tool in accordance with at least one of claims 1 to 3, characterized in that the receiving element (40; 140) has at least one recess (54; 150, 151) for receiving a clamping device disposed on a stick (43) or stick element (43''') and having a spreading cone (22) and a spreading member (24), which spreads when actuated by it and then lies against the interior surface of this recess.

5. Add-on tool in accordance with claim 3 or 4, characterized in that the receiving element (40; 140) is provided with a recess (52, 55; 152) for receiving in a closely fitting manner one end of the stick (42, 43) or stick element in the form of a metal pipe.

6. Add-on tool in accordance with at least one of the preceding claims, characterized in that the receiving element (40; 140) is a shaped part and is preferably provided with means for fastening the device (69; 72; 170) which is held by it.

7. Add-on tool in accordance with claim 6, characterized in that the fastening means are in the form of a slitted recess, in which preferably a flat section (68) of an ice axe (69) is fixed (Fig. 9).

8. Add-on tool in accordance with at least one of claims 1 to 6, characterized in that the receiving element (40; 140) is provided with a protrusion (62; 176) for mounting, and in particular pivotable mounting of the tool (41; 170) disposed on it, in particular a shovel.

9. Add-on tool in accordance with at least one of the preceding claims, characterized in that means (77, 80; 159, 180, 181) are provided for locking a shovel (72; 170) or the like to the receiving element (40; 140), which permit locking of the shovel (72; 170) or the like in various angled positions in relation to the receiving element (40; 140), in particular in a shovelling position and a chopping position.

10. Add-on tool in accordance with claim 9, characterized in that a slide (157) is provided in the receiving element (14), which is provided with locking means (159) for selectively engaging with at least one locking recess (180, 181) provided on the shovel (72; 170) or the like.

11. Add-on tool in accordance with claim 10, characterized in that the slide (157) is disposed in a recess (151) provided in the receiving element (140) and can be locked in a locking position by a ski pole element (43) or the like inserted into this recess (151).

12. Add-on tool in accordance with claim 10 or 11, characterized in that the slide (157) is slidable in the longitudinal direction of the receiving element (14) and has a locking element (159) extending crosswise to it, which extends through at least one lateral opening (161, 161') of the receiving element (14) and which can be placed into or moved out of a locking position by moving the slide (157).

13. Add-on tool in accordance with at least one of the preceding claims, characterized in that the receiving element (40; 140) has a recess (50; 151) for receiving a clamping element (24) disposed on the stick (43) and a recess (51; 150), in which a clamping device (24) for being received in a pipe-shaped stick or stick element (42), associated with this recess, is provided, which latter clamping device preferably extends out of its associated recess (51; 150) and for this purpose is preferably disposed on a support member (58) fixed in this recess (51; 150), in particular on a pipe pressed into this recess (51).

14. Add-on tool in accordance with at least one of claims 3 to 5 or in accordance with claim 13, characterized in that the clamping device (24) of the receiving element (40; 140) and the clamping device of the stick (43) are in general identical.

Fig. 2

Fig. 1

Fig.3

Fig. 4

Fig.5

Fig.6

*Fig.7*

Fig.8

7

Fig.9

Fig.10

Fig.11

Fig.12

Fig. 14

Fig. 13

Fig. 15

Fig. 16

Fig. 17

Fig. 18

Fig. 19

EP 0 191 917 B1

Fig.20

Fig. 21

Fig. 22

EP 0 191 917 B1

Fig. 23